# EUROPEAN PATENT APPLICATION

(11) **EP 2 431 148 A1**
(43) Date of publication of application: **21.03.2012**
(21) Application number: 11181592.4
(22) Date of filing: 16.09.2011
(51) Int. Cl.: B29C 44/24, B29C 44/54

(54) **Production of laminated styrene-polymerised sheets**

(30) Priority: 17.09.2010 BE 201000556; 02.09.2011 BE 201100523
(71) Applicant: Technisch Bureel Panigo N.V., 8830 Hooglede (BE)
(72) Inventor: Vereecke, Thierry, 8500 Kortrijk (BE)
(74) Representative: De Clercq, Ann G. Y.

(57) **Abstract**

The present invention relates to a production unit for continuously producing a laminated styrene-polymerised expanded sheet comprising a base layer and at least one top layer, suitable to introduce pre-expanded or expanded styrene-polymerised beads in the top layer.

## Description

### Technical field

This invention discloses a new production unit and a new production method for foamed sheet like shaped elements made of styrene-polymerised expanded beads for the continuous production, in a simple and rapid manner, of expanded styrene-polymerised sheets with a layered structure.

### Background of the invention

Foamed elements made from styrene-polymerised expanded beads are produced from pre-expanded beads charged in a closed mould. By the addition of steam the beads have a tendency to further expand and to slightly merge into each other and to fuse together. Finally, a foamed element is obtained with a shape similar to the shape of the closed mould into which the beads were charged. Subsequently, this shape can be manipulated.

It is also possible to form foamed sheets from styrene-polymerised expanded beads by means of a continuous process. The expandable styrene-polymerised beads are pre-expanded and are subsequently placed between two moving belts. There, they are exposed to steam such that the sheet is continuously growing because more and more styrene-polymerised expanded beads stick to the end of the sheet. In this way, sheets may be obtained of any length. The latter process also easily allows for the production of foamed expanded sheets formed from several layers with different material. An example of such process can be found in the following patent applications: US 3885009, US 3037897, US 3616162 and FR 1373519. In these methods, layers are produced which consist of styrene-polymerised expanded beads with a different density or by the addition of other types of beads such as polysulphide beads to reduce the flammability.

However, these methods as described in the aforementioned patent applications, all fail to ensure a good mechanical quality and/or a good control of the thickness of these layers, especially when a thin top layer should be applied. To obtain a good mechanical quality, it is important that the pre-expanded beads are forced between the two moving belts with a high pressure. In this way, the beads will fuse together when exposed to steam. As a result, the resulting foamed sheet may have much better mechanical properties.

In US 3037897, the majority of the layers is twice or more often exposed to steam. This is detrimental for the mechanical quality of the foamed sheet.

In US 3885009, US 3037897, US 3616162 and FR 1373519, the beads are fed by a conveyor belt without a system capable of feeding the beads with a constant, sufficient pressure between the moving belts. This will cause the foamed sheet to fail to meet the mechanical requirements that are currently imposed.

Using such systems, it is difficult to apply a very thin top coating layer; indeed, a breach to the surface of the base layer will occur regularly. However, most top layers have a protective function, wherein the layer should at least have a thickness of a centimetre to be effective or because a further finishing is performed. It is possible that half a centimetre to a centimetre is sanded / cut off to improve the surface roughness.

The object of the present invention is to disclose a new production unit and production method wherein foamed elements, consisting of styrene-polymerised expanded beads, can be produced, consisting of a base layer and a, preferably thin, top layer. Preferably, the thickness of the top layer may relatively accurately be determined. The laminated foamed sheet will exhibit good mechanical and/or uniform properties in the feed direction. By using a production unit, described by the present invention, a foamed laminated sheet with one or more top layers on one or both surfaces can be obtained wherein the thickness of the top layer / top layers can easily be controlled. The foamed sheet itself may exhibit uniform properties in the feed direction and the sheet may exhibit good mechanical properties.

### Summary

The present invention discloses a new production unit for the production of foamed sheet-like shaped elements made of styrene-polymerised expanded beads, to produce in a simple and rapid way expanded styrene-polymerised sheets with a, preferably thin, top layer on one or two sides in a continuous manner and wherein the thickness of such layer can be determined relatively accurately.

The present invention also relates to a novel method comprising the use of a specific production unit which can be integrated into a larger device allowing a continuous production of a layered sheet, preferably a sheet with a top layer on one or two sides.

In a first aspect, the invention relates to a production unit for continuously producing a laminated styrene-polymerised expanded sheet comprising a base layer and at least one top layer, wherein the production unit comprises:
(a) two belts (1) and (2), placed vertically one on top of the other, manufactured of perforated metal or a perforated flexible material, and rotating drums (3) and (4), wherein the belts (1) and (2) are continuously moving by the action of the drums (3) and (4) at the same speed,
(b) a space (5) between the belts (1) and (2),
(c) a steam chamber (8), suitable for blowing steam through the belts by means of the perforations,
(d) optionally, a vacuum chamber (9),
(e) optionally, a cooling section (10), wherein preferentially air is used as a cooling gas,
(f) optionally, a stabilizing section (11),
(g) optionally, a cutting unit, and
(h) one or more systems (20), comprising one or more connecting pieces (12) coupled to the drums (3) and/or (4), wherein one or more systems (20) comprise a casing with an opening, coupled to a screw or venturi system (13) or silo (50), optionally comprising a feeder device (51), suitable for introducing pre-expanded or expandable styrene-polymerised beads in the top layer.

The invention also relates to a production unit for continuously producing a laminated styrene-polymerised expanded sheet comprising at least: two belts (1) and (2), placed vertically one on top of the other, manufactured of perforated metal or a perforated flexible material in contact with rotating drums (3) and (4), wherein both belts constantly move by the action of the drums with the same rotational speed; a space (5) between belts (1) and (2); a steam chamber (8) wherein steam is blown through the belts by means of the perforations; optionally, a vacuum chamber (9); optionally, a cooling section (10), wherein preferentially air is used as the cooling gas; optionally, a stabilizing section (11); optionally, a cutting unit; and one or more systems (20) incorporated into one or more connecting pieces (12) present on the drums (3) and (4), or as a separate component coupled to the production unit; consisting of a metal casing wherein a slot (22) is present, through which a metal plate (23) can be inserted, and wherein the plate can be fixated to the casing. According to a preferred embodiment of the invention, the screw or venturi system (13) forms an angle of 90° with the belts (1) and (2).

According to a preferred embodiment of the invention, the screw or venturi system (13) or the feeder device (51) can be set to exert an adjustable constant force or a variable periodic force.

According to a preferred embodiment of the invention, the feeder device (51) comprises a wheel (52) with a set of rotating tines (53), and the feeder device (51) comprises a set of fixated tines (54). According to a preferred embodiment of the invention, the angle between the screw or venturi system (13) and the belts (1) and (2) can be adjusted.

According to a preferred embodiment of the invention, the production unit comprises an additional screw or venturi system (6), suitable for introducing pre-expanded or expandable styrene-polymerised beads in the base layer between the belts (1) and (2), wherein the additional screw or venturi system (6) preferably forms an angle of 0° with the belts (1) and (2).

According to a preferred embodiment of the invention, the one or more systems (20) comprise a slot (22) through which a metal plate (23) is inserted, wherein the distance the plate extends from the casing of the system (20) is adjustable, and/or wherein the slope of the plate relative to the casing is adjustable.

According to a preferred embodiment of the invention, the production unit comprises two hinges (30) comprising a threaded rod (31), adjacent to the slot (22) on the exterior of the casing, and the metal plate comprises profiles (32), in which the plate can be fixated to the casing by means of nuts (33), wherein one of the ends of the threaded rods (31) rests against the plate.

According to a preferred embodiment of the invention, the production unit comprises threaded rods (34) at the interior of the casing, wherein the threaded rods (34) are fixated to the casing by means of nuts.

According to a preferred embodiment of the invention, the production unit comprises belts at the sides of the space (5), which move by the action of additional drums, or comprises supporting belts positioned vertically one on top of the other and between which several profile belts are located.

According to a preferred embodiment of the invention, the contact areas between the belts and the rest of the production unit with the material comprise a layer with a low friction coefficient, preferably Teflon, and/or small drums (7) are present on said contact areas, driven by the movement of the belts, wherein said drums are preferably made of, or are coated with a material with a low friction coefficient, preferably Teflon.

According to a preferred embodiment of the invention, the sides of the steam and/or vacuum chamber are shielded with metal plates, preferably coated with material with a low friction coefficient, preferably Teflon, and/or the drums include connecting pieces (12), and/or the space between the two drums is closed off with plates.

According to a preferred embodiment of the invention, the distance between the two moving belts is adjustable and/or the belts are laterally movable.

According to a preferred embodiment of the invention, the production unit comprises partitions such that different compartments are created in the system (20).

In a second aspect, the invention relates to a device for continuously producing a laminated styrene-polymerised expanded sheet comprising at least one or more production unit(s) according to the first aspect of the invention.

The present invention also relates to a novel method comprising the use of a specific production unit which can be integrated into a larger device allowing a continuous production of a sheet with a top layer on one or two sides.

In the third aspect, the invention relates to a method for continuously producing a laminated styrene-polymerised expanded sheet, using a production unit according to the first aspect of the invention or using a device according to the second aspect of the invention, the method comprising the steps of:
(a) introducing, preferably pre-expanded, styrene-polymerised beads in the space (5), such that a main stream of beads is formed, preferably by means of a screw or venturi system (6),
(b) introducing another type of styrene-polymerised beads by means of a force perpendicular to the main stream, such that part of the beads of the main stream is pushed away in a controlled manner and the beads of the other types take their place, and
(c) optionally, providing a plate (23) which, just before the insertion of another type of styrene-polymerised beads, locally disrupts the main stream.

According to a preferred embodiment of the method of the invention, the beads of the other type comprise beads with a different density compared to the beads of the main stream.

According to a preferred embodiment of the method of the invention, the beads of the other type of beads comprise beads of which the concentration of athermanous materials, preferably the concentration of graphite, carbon black, metal or metal oxide particles that are homogeneously distributed in the styrene-polymerised beads, is different compared to the concentration of the beads of the main stream.

According to a preferred embodiment of the method of the invention, the cooling gas in the cooling section is applied under high pressure.

To better show the features of the invention, hereafter, as an example without any limitative character, several preferred embodiments are described with reference to the accompanying figures.

### Detailed description of the figures

**Figure 1**: production unit according to a preferred embodiment of the invention, mounted on a continuous production process for sheets of expanded styrene-polymerised beads with one base layer and one top layer, wherein the screw system (6) is placed vertically.
**Figure 2**: production unit according to a preferred embodiment of the invention, mounted on a continuous production process for sheets of expanded styrene-polymerised beads with one base layer and one top layer, wherein a sheet with a slot is used.
**Figure 3**: device presented in Figure 2 in operational mode.
**Figure 4**: detailed drawing of the interior of the casing according to a preferred embodiment of the invention.
**Figure 5**: detailed drawing of the exterior of the casing according to a preferred embodiment of the invention.
**Figure 6**: production unit according to a preferred embodiment of the invention, mounted on a continuous production process of sheets of expanded styrene-polymerised beads with one base layer and one top layer, wherein the screw system (6) is placed horizontally.
**Figure 7**: detailed drawing of the exterior of the casing according to a preferred embodiment of the invention.
**Figure 8**: detailed drawing of a production unit according to a preferred embodiment of the invention, mounted on a continuous production process for sheets of expanded styrene-polymerised beads with one base layer and one top layer, comprising a silo (50) and a feeder device (51) which allows to feed the styrene-polymerised beads of the top layer with a constant continuous force.
**Figure 9**: Detailed drawing of a feeder device (51) of a production unit according to a preferred embodiment of the invention, comprising a wheel (52) with rotating tines (53) and fixated tines (54).

### Detailed description of the invention

As further used in this text, the singular forms "a," and "the" include both the singular and the plural form, unless the context clearly dictates otherwise.

The terms "comprising", "comprises" as used further, are synonymous with "inclusive", "include" or "containing", "contains" and are inclusive or open and do not exclude additional unmentioned members, elements or method steps. The terms "comprising", "comprise" include the term "consisting".

The enumeration of numerical values based on numerical ranges includes all values and fractions in these ranges, as well as the cited endpoints.

The term "about", as used when referring to a measurable value such as a parameter, a quantity, a duration, and the like, is meant to encompass variations of +/- 10% or less, preferably +/- 5% or less, more preferably +/- 1 % or less, and still more preferably +/-0.1 % or less, from the specified value, in so far the variations are applicable to function in the disclosed invention. It is to be understood that the value to which the term "about" refers *per* se, is also disclosed.

All documents cited in the present specification are herein incorporated in full by reference.

Unless otherwise defined, all terms disclosed in the invention, including technical and scientific terms, have the meaning as it is usually understood by a skilled person. As further guidance, definitions are included for further explanation of terms used in the description of the invention.

A foamed element with a layered structure that consists of a base layer and a top layer along one or two sides, wherein each layer consists of styrene-polymerised expanded beads or of a mixture of several styrene-polymerised expanded beads, has many advantages as the properties of each layer can be tuned to a particular application. This can result in large cost reductions.

It is possible for the top layer to act as a mechanical protective layer. An example is a foamed element consisting of a thick layer of styrene-polymerised expanded beads providing sufficient thermal or acoustic insulation, and a thin top layer of styrene-polymerised expanded beads with a higher density and hence, a higher compressive strength. Because of its more rigid nature, this coating layer would prevent, for example, when putting the sheet in a roof construction, that the construction worker's fingerprints would leave a visible imprint in the sheet. This would be the case with a construction with sheets, which would consist entirely of the styrene-polymerised expanded beads of the thickest layer. A sheet consisting entirely of beads with a higher density and used in the top layer, would be too expensive. This example is merely illustrative as there are more applications for sheets with a layered structure of which the density of each layer can be controlled.

Another example of a layered structure is a top layer of expanded polysulphide-polymerised beads in combination with a base layer of styrene-polymerised beads. The polysulphide-polymerised beads will protect the top layer against fire, while the base layer provides for the insulation. It is of course important that the top layer is not too thin (too little protection) or too thick (poorer thermal resistance because of a thinner insulation layer).

It is also possible to produce a laminated foamed element wherein the base layer consists of styrene-polymerised expanded beads with the addition of athermanous substances (metal powders, oxides, graphite, carbon black). These beads are known for their good insulation property (see patent applications EP 0981574 B1 and EP 0902804 A1) but the addition of athermanous materials make them less resistant to sunlight. In the latter case, the top layer may consist of styrene-polymerised expanded beads without the addition of athermanous substances, which do show a good resistance to sunlight. However, when the top layer is too thick, the thermal resistance of the sheet as a whole will deteriorate, which is economically disadvantageous. When the top layer is too thin, the styrene-polymerised beads with the addition of athermanous substances may appear in concentrated groups at the surface of the sheet, such that it has no longer a good resistance to sunlight. A good control of the thickness of the layers is of utmost importance. When the athermanous substances are present in concentrations from 3 to 25 weight% in the styrene-polymerised expanded bead, these substances will minimize heat loss through thermal radiation and thus they increase the thermal resistance of the foamed element. On the other hand, these beads deform to a large extent upon exposure to sunlight, which is detrimental for certain applications. The term "weight%" is used herein to refer to the weight percentage of a substance in the bead, wherein the weight percentage is calculated on the total weight of the bead.

With the manufacturing method of the present invention, it is possible to produce a layered foamed element, wherein one layer consists of styrene-polymerised expanded beads comprising 3 to 25 weight% of athermanous substances as a homogeneous distribution, and wherein said layer is responsible for the thermal resistance of the whole. The other layer may consist of expanded styrene-polymerised beads comprising 0.05 % to 2.5 weight% of athermanous substances which are homogeneously distributed over the bead. These styrene-polymerised expanded beads have a poorer insulation resistance but deform less under influence of sunlight. Hence, the layered foamed element is better protected against deformation under influence of sunlight.

In a first aspect, the invention relates to a production unit for continuously producing a laminated styrene-polymerised expanded sheet comprising a base layer and at least one top layer, wherein the production unit comprises:
(a) two belts (1) and (2), placed vertically one on top of the other, manufactured of perforated metal or a perforated flexible material, and rotating drums (3) and (4), wherein the belts (1) and (2) are continuously moving by the action of the drums (3) and (4) at the same speed,
(b) a space (5) between the belts (1) and (2),
(c) a steam chamber (8), suitable for blowing steam through the belts by means of the perforations,
(d) optionally, a vacuum chamber (9),
(e) optionally, a cooling section (10), wherein preferentially air is used as a cooling gas,
(f) optionally, a stabilizing section (11),
(g) optionally, a cutting unit, and
(h) one or more systems (20), comprising one or more connecting pieces (12) coupled to the drums (3) and/or (4), wherein one or more systems (20) comprise a casing with an opening, coupled to a screw or venturi system (13) or silo (50), optionally comprising a feeder device (51), suitable for introducing pre-expanded or expandable styrene-polymerised beads in the top layer.

Preferably, the thickness of the layer ranges between 0.1 and 2 cm, more preferably between 0.2 and 1 cm, most preferably between 0.3 and 0.5 cm. According to a preferred embodiment of the invention, the opening is coupled to a screw or venturi system. According to a preferred embodiment of the invention, the opening is coupled to a screw system. According to a preferred embodiment of the invention, the opening is coupled to a silo. Preferably, the silo comprises a feeder device for supplying the pre-expanded or expandable styrene-polymerised beads. Preferably, the feeder device comprises a wheel.

In this production unit, the cooling, vacuum, stabilization and/or cutting sections are optional. However, if absent, it is recommended that after the steam chamber, the sheet is maintained for a short time between the two belts as the sheet exerts a large pressure on the belts, and the pressure only gradually decreases. The function of the stabilization section can also be adopted, for example, by the cooling and/or vacuum section, if these are long enough. After said production unit, it is also possible to implement an elastification process. The latter process serves to improve the acoustic insulation of the sheet. Furthermore, it is also cheaper to carry out this process after the manufacturing process.

For example, in the production unit of the present invention, a sheet can be produced consisting of a layer, preferably the base layer, containing (black) beads with the addition of graphite, carbon black, metal or metal oxide particles, and a layer, preferably the top layer, containing for example common white or light gray beads.

The invention also comprises the possibility to produce, other than foamed elements of polystyrene, foamed elements of polypropylene, polyethylene or polysulphides. Also expandable beads made of a copolymer of styrene and olefins can be used in the method of this invention. According to a preferred embodiment of the invention, these particles may have a styrene content of 100, 95, 90, 85, 80, 75, 70, 65, 60, 55 or 50 %, with the percentage a weight percentage calculated on the total weight of the beads.

The present invention also relates to a production unit as described above, wherein the beads of the base layer are introduced by a screw or venturi system (6) between the two belts (1 and 2). To this stream will be referred to as the 'main stream'. According to a preferred embodiment of the invention, the production unit comprises an additional screw or venturi system (6), suitable for introducing pre-expanded or expandable styrene-polymerised beads in the base layer between the belts (1) and (2), wherein the additional screw or venturi system (6) preferably forms an angle of 0° with the belts (1) and (2).

According to a preferred embodiment of the invention, the beads of the top layer / top layers are inserted by a system (20) where they are pushed into said main stream by a force as constant as possible from above or from below. As a result, the original styrene-polymerised beads of the main stream become more compressed and the space thus created, is occupied by the beads of the top layers. The stream passing between the two belts does not become thicker by the addition of the styrene-polymerised beads of the base layer and the pressure in this stream is maintained such that the mechanical quality of the resulting foamed sheet remains good.

This system (20) can be positioned such that this inserts the beads of the top layer / top layers in the main stream after the main stream went through the screw / venturi system (6) but before the stream of beads reaches the belts (1 and 2). According to a preferred embodiment of the invention, the length of the system (20) is kept as short as possible to avoid excessive energy dissipation as the friction coefficient between the styrene-polymerised beads is high. Therefore, preferentially, a connecting piece of one of the drums (3) and (4) is used for the system (20).

According to a preferred embodiment of the invention, the force of said screw (13) used to propel the styrene-polymerised beads is adjustable. I.e. the force used to push the beads present in the system (20) onto the main stream is also adjustable. This allows to correctly adjust the thickness of the top layer within narrow limits. According to a preferred embodiment of the invention, the screw or venturi system (13) or the feeder device (51) can be set to exert an adjustable constant force or a variable periodic force.

It is also possible that the screw or venturi system (13) and (6) provides the system (20) with styrene-polymerised beads at an angle between 0° and 90° with the belts (1) and (2). The slope can also be adjusted between 0 and 90°, more specifically, the slope may also be 5°, 10°, 15°, 20°, 25°, 30°, 35°, 40°, 45°, 50°, 55°, 60°, 65°, 70°, 75°, 80° or 85°. According to a preferred embodiment of the invention, the angle between the screw or venturi system (13) with the belts (1) and (2) is adjustable. According to a preferred embodiment of the invention, the additional screw or venturi system (6) forms an angle of 0° with the belts (1) and (2).

The supply of styrene-polymerised expanded beads to the system (20) is done most easily when the screw (13) or venturi system is positioned vertically on top of it. This allows it to directly exert a constant force on the styrene-polymerised beads of the base layer. According to a preferred embodiment of the invention, the screw or venturi system (13) forms an angle of 90° with the belts (1) and (2).

If the screw (13) would be positioned horizontally, because of the high friction between the styrene-polymerised beads, the force of said screw is not optimally transferred to the base layer.

According to a preferred embodiment, the system (20) is coupled to a silo (50) filled with styrene-polymerised beads, wherein the beads are introduced by a feeder device (51). This feeder device (51) is capable of pushing these beads into the base layer with an adjustable constant force or with a periodic force with a large frequency. According to a preferred embodiment of the invention, the feeder device (51) comprises a wheel (52) with a set of rotating tines (53) and/or the feeder device (51) comprises a set of fixated tines (54). According to a preferred embodiment, the system (20) is coupled to a screw system (13) wherein the beads are introduced by a feeder device (51).

In an alternative embodiment of the invention, the screw (13) providing the system (20) of beads, is placed horizontally, and the system (20) comprises a pressure device that is able to push the styrene-polymerised beads of the top layer with an adjustable force vertically or diagonally onto the base layer. It is not required that the magnitude of the force is constant, a periodic force with a sufficiently high frequency is also sufficient.

According to a preferred embodiment of the invention, the formed top layer has a variable thickness ranging between two boundary values. The frequency of the periodic force may be chosen to be smaller if the thickness of the top layer should be between the two boundary values.

In one embodiment of the invention, a metal plate (23) can be mounted onto the system (20) which will locally disrupt the base layer by a metallic protrusion and will create some space. The expanded styrene-polymerised beads may then be pressed into said space. Preferably, the beads are pressed with sufficient force, otherwise the beads of the base layer may push the beads of the top layer back up because of elasticity and disrupt a constant thickness of the top layer. According to a preferred embodiment of the invention, the one or more systems (20) comprise a slot (22) through which a metal plate (23) is inserted, wherein the distance the plate extends from the casing of the system (20) is adjustable, and/or wherein the slope of the plate relative to the casing is adjustable.

It is possible to construct the system (20) such that the size of the metal protrusion and the angle it forms with the system (20) is adjustable. According to a preferred embodiment of the invention, the metal plate (23) may then move freely such that it can be determined how far the plate may extend from the casing of the system (20), and/or such that the slope of the plate relative to the casing can be adjusted. The slope can be adjusted between 5 and 85°, more specifically, the slope may also be 10°, 15°, 20°, 25°, 30°, 35°, 40°, 45°, 50°, 55°, 60°, 65°, 70°, 75°, 80°.

The present invention also relates to a production unit as described above, wherein the casing of the system (20) is provided with an opening through which pre-expanded styrene-polymerised or expandable beads can be inserted. The present invention also relates to a production unit as described above, on which two such systems (20) are mounted, one on top and one at the bottom. Hence, the resulting foamed sheet will have on both sides a top layer whose thickness is separately adjustable.

The present invention also relates to a production unit as described above, wherein the system (20) is mounted at the bottom, such that the top layer will be positioned at the bottom of the resulting foamed sheet.

The present invention also relates to a production unit as described above, comprising two hinges (30) comprising a threaded rod (31), adjacent to the slot (22) on the exterior of the casing, wherein on the metal plate profiles (32) are mounted, and wherein the plate can be fixated to the casing by means of nuts (33). In this production unit, threaded rods (34) can be fixated to the casing by nuts on the other side of the metal plate, wherein one of the ends of the rods rests against the plate. According to a preferred embodiment of the invention, the production unit comprises two hinges (30) comprising a threaded rod (31), adjacent to the slot (22) on the exterior of the casing, and the metal plate comprises profiles (32), wherein by means of nuts (33) the plate can be fixated to the casing, wherein one of the ends of the threaded rods (31) rests against the plate. According to a preferred embodiment of the invention, the production unit comprises threaded rods (34) at the interior of the casing, wherein the threaded rods (34) are fixated to the casing by means of nuts.

The present invention also relates to a production unit as described above, wherein at the sides of the space (5) also belts are provided which move by the action of additional drums, or wherein supporting belts are provided which are positioned vertically one on top of the other and between which belts several profile belts are present. According to a preferred embodiment of the invention, the production unit comprises belts at the sides of the space (5), which move by the action of additional drums, or the production unit comprises supporting belts positioned vertically one on top of the other and between which several profile belts are present.

The present invention also relates to a production unit as described above, wherein the contact areas between the belts and the rest of the production unit with the material contains a layer a low friction coefficient (e.g. Teflon), and/or wherein on said contact areas small drums (7) are present, driven by the movement of the belts (preferentially made of, or coated with material with a low friction coefficient (e.g. Teflon)). According to a preferred embodiment of the invention the contact areas between the belts and the rest of the production unit with the material comprise a layer with a low friction coefficient, preferably Teflon, and/or small drums (7) are present on said contact areas, driven by the movement of the belts, wherein said drums are preferentially made of or coated with material with a low friction coefficient, preferably Teflon.

With friction coefficient is meant herein the static friction coefficient of the material with steel. Preferably, the low friction coefficient is less than 0.10, more preferably less than 0.09, more preferably less than 0.08, more preferably less than 0.07, more preferably less than 0.06, more preferably less than 0.05, most preferably less than 0.04.

The present invention also relates to a production unit as described above, wherein the sides of the steam and/or the vacuum chamber are shielded with metal plates, preferably coated with material with a low friction coefficient (e.g. Teflon), and/or wherein connecting pieces (12) are present on the drums, and/or wherein plates are present which close off the space between the two drums. According to a preferred embodiment of the invention, the sides of the steam and/or the vacuum chamber are shielded with metal plates, preferably coated with material with a low friction coefficient, preferably Teflon, and/or the drums comprise connecting pieces (12), and/or the space between the two drums is closed off with plates.

The present invention also relates to a production unit as described above, where the distance between two moving belts is adjustable and/or the belts may be laterally movable. According to a preferred embodiment of the invention, the distance between two moving belts is adjustable and/or the belts are laterally movable. The present invention also relates to a production unit as described above, wherein several compartments were created in the system (20) using partitions. In each compartment a different kind of beads may be added. According to a preferred embodiment of the invention, the production unit comprises partitions such that different compartments are created in the system (20).

In a second aspect, the invention relates to a device for continuously producing a laminated styrene-polymerised expanded sheet comprising at least one or more production unit(s) according to the first aspect of the invention.

The invention also relates to the use of a production unit as described above or a device as described above for producing a layered styrene-polymerised expanded sheet, which preferably consists of a base layer and one or more top layers.

In a third aspect, the invention relates to a method for continuously producing a laminated styrene-polymerised expanded sheet, preferably with a base layer and one or more top layers, using a production unit according to the first aspect of the invention or using of a device according to the second aspect of the invention, the method comprising the steps of:
(a) introducing, preferably pre-expanded, styrene-polymerised beads in the space (5), such that a main stream of beads is formed, preferably by means of a screw or venturi system (6),
(b) introducing another type of styrene-polymerised beads by means of a force perpendicular to the main stream, such that part of the beads of the main stream is pushed away in a controlled manner and the beads of the other types take their place, and
(c) optionally, providing a plate (23) which, just before the insertion of another type of styrene-polymerised beads, locally disrupts the main stream.

The invention also relates to a method for continuously producing a laminated styrene-polymerised expanded sheet using a production unit as described above or using a device as described above, comprising the steps of:
(a) introducing pre-expanded styrene-polymerised beads in the space (5), thus forming a main stream of beads,
(b) locally blocking the free passage of the bead of the main stream (41) by one end (24) of one or more metal plates, and
(c) introducing pre-expanded beads of a different type (42) along said one or more metal plates.

The present invention also relates to a method as described above, wherein the beads of another type are beads with a different density compared to the beads introduced by the main stream, or wherein the beads of another type are beads of which the concentration of athermanous substances (graphite, carbon black, metal or metal oxide particles) that are homogeneously distributed in the styrene-polymerised bead, is different from that of the main stream. According to a preferred embodiment of the method according to the invention, the beads of the other type comprise beads with a different density compared to the beads of the main stream.

According to a preferred embodiment of the method of the invention, the beads of the different type comprise beads of which the concentration of athermanous substances, preferably the concentration of graphite, carbon black, metal or metal oxide particles that are homogeneously distributed in the styrene-polymerised beads, is different from that of the beads of the main stream.

The present invention also relates to a method as described above, wherein the styrene-polymerised beads of the base layer are not directly introduced between the two belts (1) and (2), but by a horizontal screw (6) or venturi system in the top and/or bottom connecting piece of the drums. The another connecting piece may then be used to install the system (20).

The present invention also relates to a method as described above, wherein the beads are directly introduced between the two belts by means of a screw (6) or a pneumatic pusher, or indirectly by connecting a screw (6) or a pneumatic pusher to one of the connecting pieces of the drums.

The present invention also relates to a method as described above, wherein the cooling gas in the cooling section is applied under high pressure.

Preferably the pressure corresponds to an overpressure of more than 1000 Pa, preferably more than 2500 Pa, more preferably more than 5000 Pa, more preferably more than 10000 Pa, more preferably more than 25000 Pa, more preferably more than 50000 Pa, most preferably more than 100000 Pa.

Also, a styrene-polymerised expanded sheet is disclosed with a top layer on one or both sides of the foamed sheet obtained by one of the methods described above.

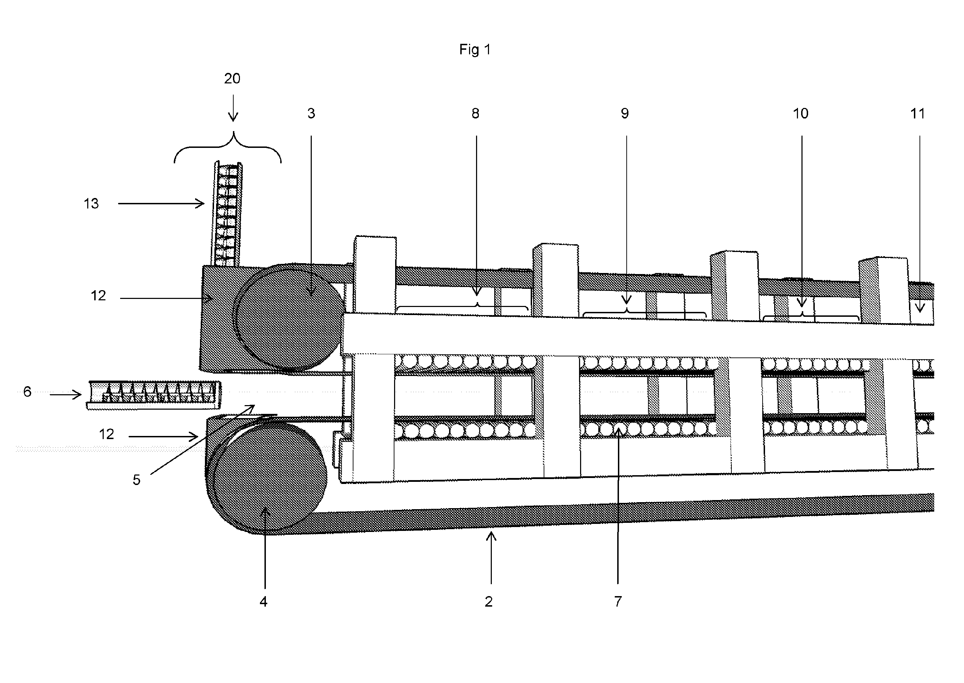

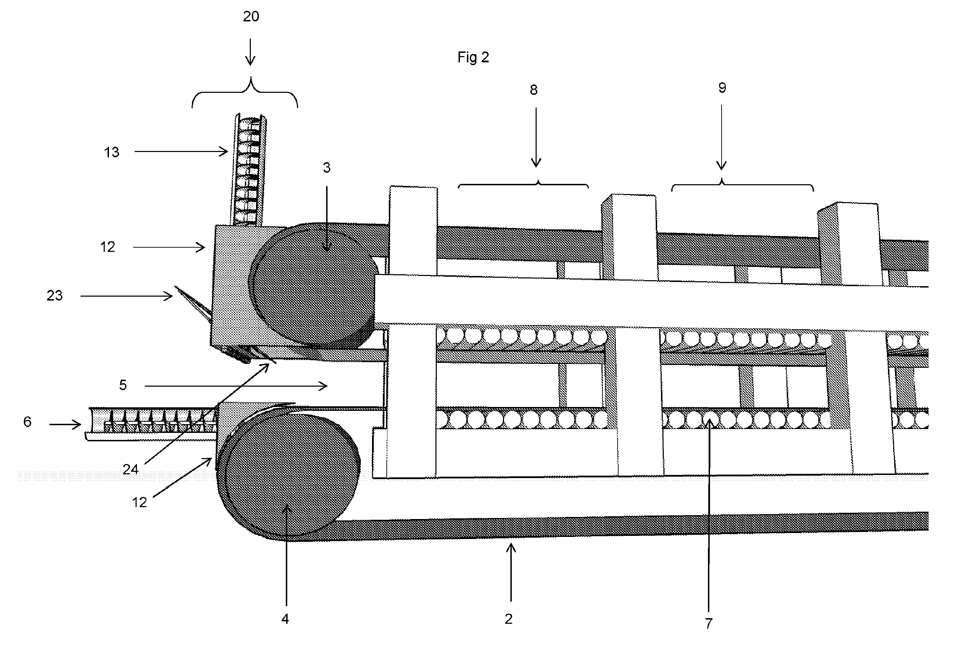

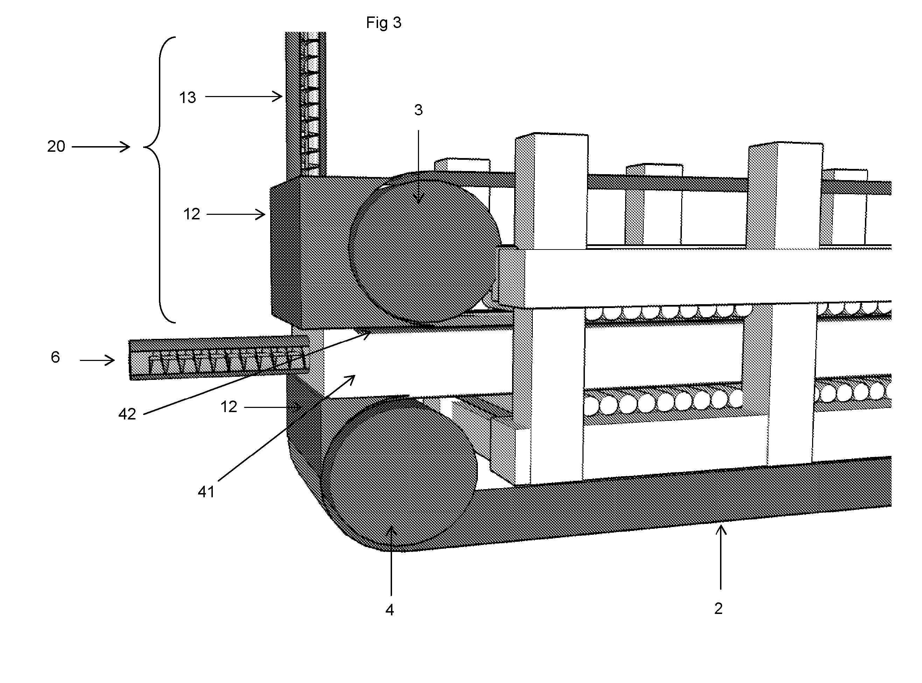

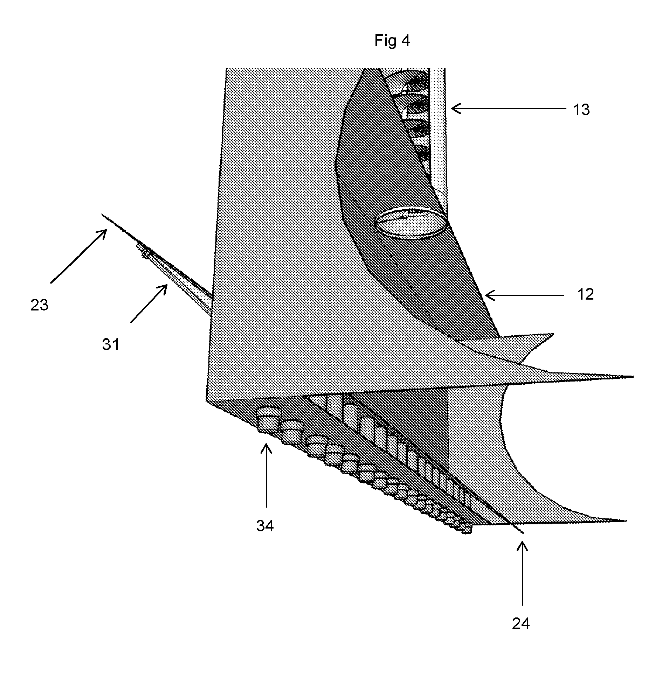

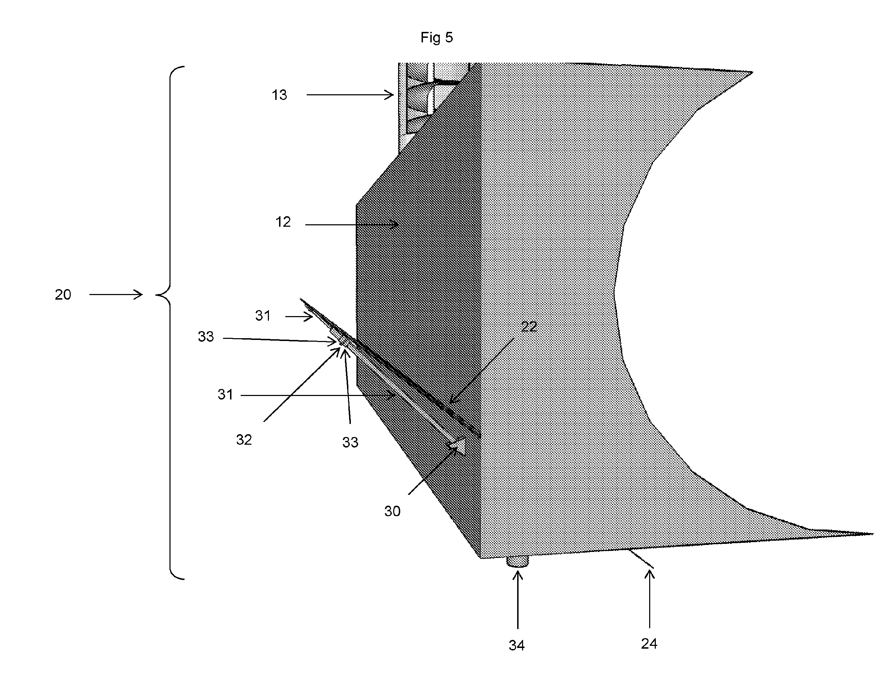

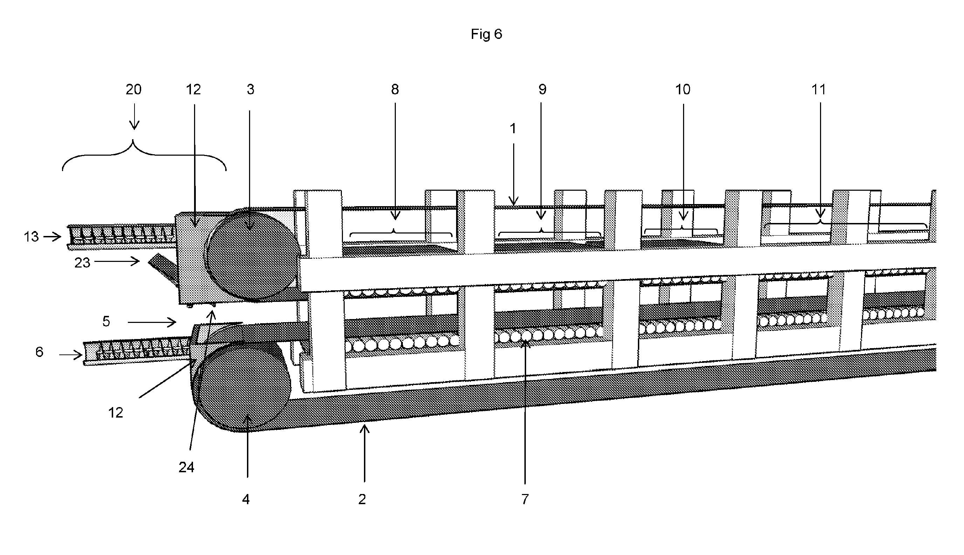

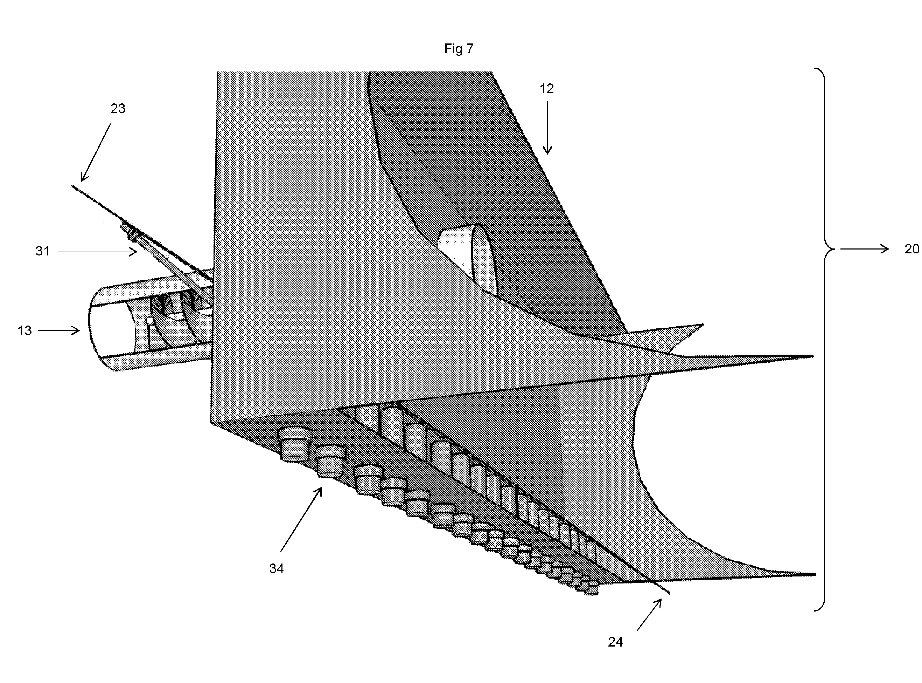

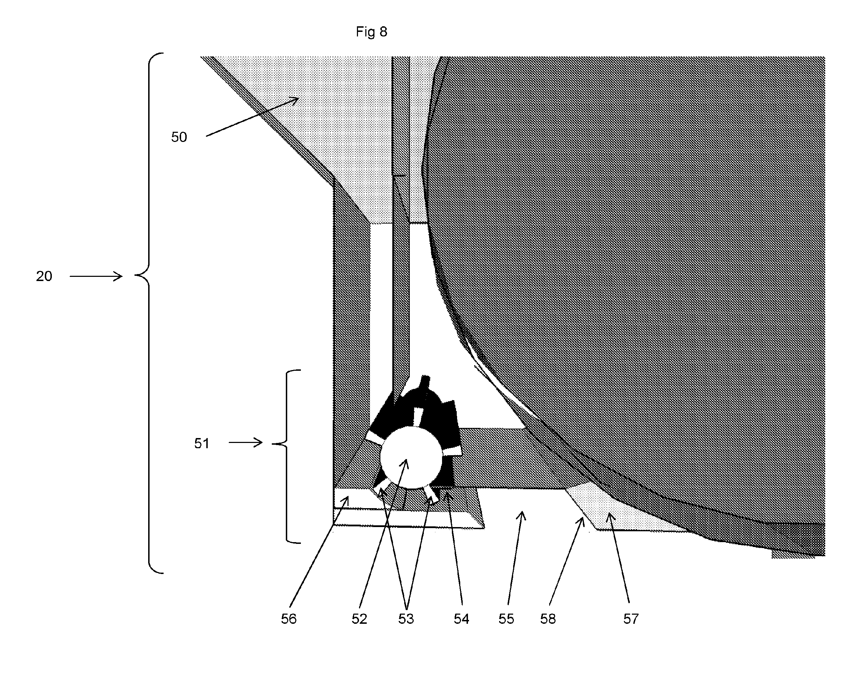

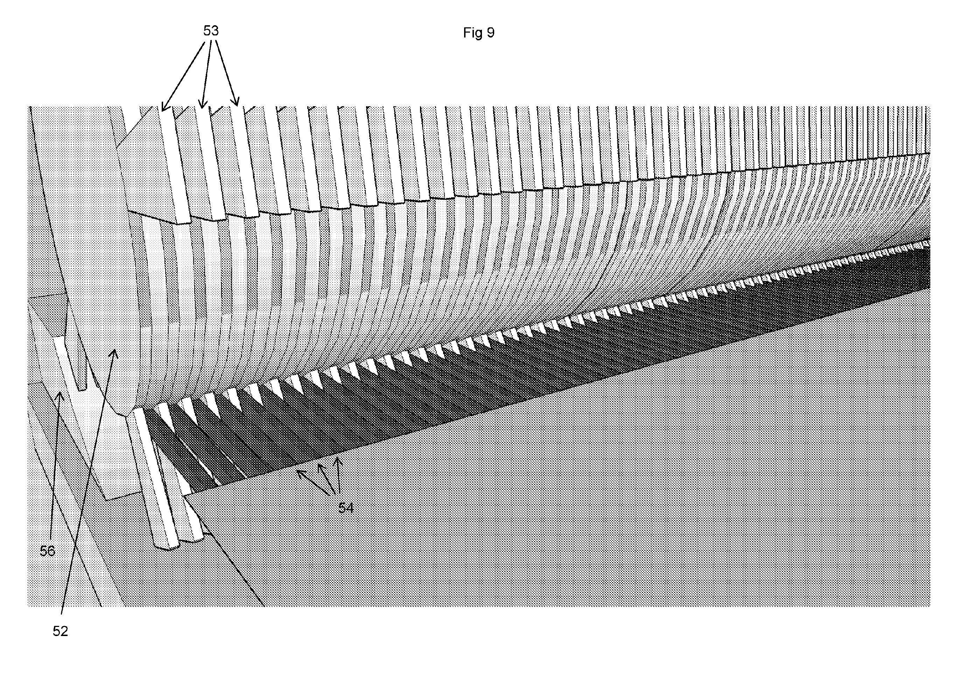

In the following, specific embodiments of the invention are described in more detail with reference to the figures. In Figure 1, a production unit according to a preferred embodiment of the invention is shown, mounted on a continuous production process for sheets of expanded styrene-polymerised beads with one base layer and one top layer. In Figure 2, a production unit according to a preferred embodiment of the invention is shown, mounted on a continuous production process for sheets of expanded styrene-polymerised beads with one base layer and one top layer, wherein wherein a sheet with a slot is used. In Figure 3, a device is shown according to a preferred embodiment of the invention in operational mode. In Figure 4 a detailed drawing is shown of the interior of the casing according to a preferred embodiment of the invention. In Figure 5, a detailed drawing is shown of the exterior of the casing according to a preferred embodiment of the invention. Figure 6 is a production unit according to a preferred embodiment of the invention, mounted on a continuous production of sheets of expanded styrene-polymerised beads with a low head and a top layer, whereby the screw system (6) is placed horizontally. Figure 7 is a detailed drawing of the exterior of the casing according to a preferred embodiment of the invention. Figure 8 is a detail drawing of a production unit according to a preferred embodiment of the invention, comprising a silo (50) and a feeder device (51) that allows the styrene-polymerised beads of the top layer with a constant continuous force to enter. Figure 9 is a detail drawing of a feeder device (51) of a production unit according to a preferred embodiment of the invention, comprising a wheel (52) with rotating tines (53) and fixated tines (54).

The production unit of the present invention can either be incorporated into the device for the continuous production of expanded styrene-polymerised sheets or - with some changes - can be incorporated into this device. This process usually comprises two horizontal belts positioned vertically one on top of the other, (1) and (2), which lie on rotating drums (3) and (4). Both belts move continuously by the action of drums with the same rotational speed. Between these two belts a space (5) is created in which the pre-expanded styrene-polymerised beads can be introduced by means of a screw (6) or a venturi system or a pneumatic pusher (not shown). It is preferred for this invention to use a screw.

The two belts consist of perforated metal or a perforated flexible material (the perforations are not shown). It may also be possible to position on the sides of the space two belts that also move by the action of the drums. Another possibility is to use two supporting belts that are located vertically one on top of the other, but between which three to four profile belts are located.

The pre-expanded styrene-polymerised beads are introduced between these profile belts to obtain other geometric shapes than a simple sheet like shape.

To reduce the friction between the belt and the metal parts of the device, different techniques can be used. For example, the contact areas between the belts and the rest of the device may be coated with a material with a low friction coefficient. For this invention, the use of Teflon is preferred.

Another possibility is to install small drums (7) on these contact areas. These drums are not driven by a device but only by the movement of the belts itself. Preferably, the material these drums are made of, also has a low friction coefficient. Again, for this invention, the use of Teflon is preferred.

A last possibility is to apply the air used as a cooling gas in the cooling section with under high pressure to form a kind of air cushion between the rest of the device and the metal belts. However, it is also preferred to coat the contact area between the device and the belts with a material with a low friction coefficient. Also here, the use of Teflon is preferred.

When a mass of expandable or pre-expanded styrene-polymerised beads is introduced between these two belts, the continuous motion of these belts will ensure that the mass of beads is also constantly moving. Hence, this mass is introduced into the steam chamber (8) where steam is blown through the belts by means of the perforations. Hence, the particles will merge into each other such that a sheet is formed.

Subsequently, this newly formed sheet of expanded styrene-polymerised beads will move towards the vacuum chamber (9) after which the sheet will be cooled by the action of a cooling gas in the cooling section (10). In most configurations, air is used as a cooling gas. Finally, the sheet will reach the stabilization section (11), such that the sheet is first allowed to stabilize and cool to perform any further processing steps more smoothly and accurately. Optionally, the vacuum chamber and the cooling section may be omitted.

The sides of the steam and the vacuum chamber may be shielded with metal plates as to minimize the escape of steam into the environment (not shown in the drawing). Again, material with a low friction coefficient such as Teflon will be used to reduce the friction between the metal plate and the sheet made from styrene-polymerised expanded beads. To minimize the loss of steam to a minimum, connecting piece (12) may also be mounted on the large drums and the space between the two drums may also be closed off by a plate (not shown).

Behind this continuous production process, a cutting unit is located for cutting the sheet with the desired length. Optionally, more finishing processes are located here.

A disadvantage of this process is that always sheets are being produced with the same diameter. However, the distance between the two moving belts can be adjusted. Therefore, the height of the obtained sheet is adjustable. It is also possible to allow the belts to move laterally such that the width of the sheet may also be selected.

According to a preferred embodiment of this continuous process, the expandable styrene-polymerised beads are either directly introduced between the two belts using a screw (6) or a venturi system or by connecting the screw (6) or venturi system to one of the connecting pieces of the drums.

Preferably, the system (20) is mounted into the connecting piece of one of the drums (3) and (4) and is provided with expanded styrene-polymerised beads either by a screw (13) or venturi system positioned vertically or diagonally, or by a silo (50) that will feed the beads by means of a feeder device (51) present in the system (20).

The force of the screw (13) or the venturi system used to propel the expanded beads is adjustable. The beads added to the system (20) will push against the styrene-polymerised expanded beads of the base layer and displace them locally to create some space. This will allow the beads in the system (20) to be nested into this space. The size of this space, which is related to the thickness of the top layer, will be determined by the force of the screw (13) or venturi system propelling the beads. In this way, a foamed sheet with a high mechanical quality with a top layer on one or two sides is produced whose thickness can be accurately determined.

When a silo (50) provides for the feeding of the styrene-polymerised beads of the top layer, the feeder device (51) present in the system (20) should preferably be capable to push these beads with an adjustable constant force or a variable periodic force with a high frequency against the styrene-polymerised expanded beads of the base layer and locally displace the beads to create some space. This will allow the beads in the system (20) to be nested into this space. The size of this space, which is related to the thickness of the top layer, will be determined by the force of the feeder device propelling the beads. In this way, a foamed sheet with a high mechanical quality with a top layer on one or two sides is produced whose thickness can be accurately determined.

A non-limiting example of a feeder device (51) suitable for the present invention is a rotating wheel (52) comprising a set of tines (53) that co-rotate and of which the distance between the tines preferably ranges between 0.5 mm and 20 mm. The thickness of the tines itself preferably ranges between 0.5 mm and 20 mm. A preferred embodiment of the invention also comprises a set of fixated tines (54). These are positioned such that the rotating set of tines (53) and the fixated set of tines (54) easily rotate into each other. The thickness of the tines of the fixated set preferably ranges between 0.5 and 20 mm, more preferably between 1 and 15 mm, most preferably between 5 and 10 mm, and the distance between the tines preferably ranges between 0.5 and 20 mm, more preferably between 1 and 15 mm, most preferably between 5 and 10 mm.

By rotating the wheel, the space between the tines is first filled with styrene-polymerised beads of the silo (50), subsequently the space between the tines is protected by a tool (56) such that the beads can no longer escape. Ultimately, these beads are driven from this space by a different set of tines (54) rigidly mounted in the feeder device (51) and they are pushed into a channel (55). This channel (55) leads above or below the beads of the base layer such that these are locally displaced by the styrene-polymerised beads of the top layer.

Due to the small space between the tines, the styrene-polymerised beads of the top layer will not easily fall between the tines. This means that at a low rotational speed, congestion might arise between two tines such that the beads themselves may locally become stressed. This means that the beads will stick to each other and will not be inclined to move into the narrow space between the tines. Preferably, the distance between the tines will therefore not be smaller than the average diameter of the expanded styrene-polymerised beads of the top layer.

According to a preferred embodiment of the invention, between the end of the channel (55) and the metal band (2) a tool (57) is placed to keep the resulting layered structure in place.

According to a preferred embodiment of the invention, preferably, the direction of the channel (55) is chosen according to the tangent to the circular motion of the rotating tines. The angle between the channel and the horizontal can be selected between 0° and 90°. In particular, the angle may also be 5°, 10°, 15°, 20°, 25°, 30°, 35°, 40°, 45°, 50°, 55°, 60°, 65°, 70°, 75°, 80° or 85°.

According to a preferred embodiment of the invention, the mass of styrene-polymerised beads into the channel may, at a small angle between the channel and the horizontal, be pressed against a slope (58) such that this mass is pressed with a larger force into the styrene-polymerised beads of the top layer.

Because the speed of the rotating wheel can be determined, the pressure at which the beads are pushed into the channel, and therefore also in the base layer may be chosen. In this way, the thickness of the top layer may be regulated. Furthermore, it is possible to allow the screw (13) or venturi system to horizontally connect with the system (20), but in that case, preferably in the system an additional device should be present forcing the styrene-polymerised beads upwardly or downwardly against the base layer. The magnitude of this force can be constant or periodic. Furthermore, a metal plate (23) may be mounted in the system (20) where the protrusion (24) locally blocks the base stream. This allows the styrene-polymerised beads present in the system (22) to be more easily incorporated into the main stream. Again, an additional upward / downward force that pushes the beads into the main stream is preferred.

The metal plate (23) may be mounted in the system (20) such that the length of the protrusion (24) and the angle between the system (20) and the protrusion (24) can be selected. To this end, a slot (22) is made through which a metal plate (23) can be inserted. Preferably, the slot is sufficiently high such that the metal plate can still move freely; the plate can easily be pushed deeper and the slope of the plate relative to the casing is adjustable between 5 and 85°. The casing is designed such and the metal plate (23) is long enough such that the plate, when inserted far enough into the slot, it extends beyond the casing. Hence, a piece (24) of the metal plate locally blocks the free passage of the beads of main stream (41). This is used to introduce beads of a different type (42) into the process along the metal plate by an upward / downward force. If the plate (23) is brought into the correct position, it can be fixated to the system (20). In what follows, only one example is given of one specific way to obtain this.

Adjacent to the slot (22) on the exterior of the casing, two hinges (30) may be welded. Also a threaded rod (31) (not shown) is mounted on each hinge. On the metal plate profiles (32) are mounted, such that the plate can also be pushed onto the rods when the plate is pushed through the slot. Using nuts (33), it can be fixated.

At the other end, use can be made of an analogous mechanism. Here, for example, threaded rods (34) may be fixated against the metal casing by nuts. All rods are positioned such that one of their ends rests against the metal plate. Hence, this plate (23) is completely fixated.

In Figure 2, the invention with this extension is illustrated. In this figure, a foamed sheet is produced with a base layer and top layer. The two layers each have a different colour. This is only presented as a clarification of the drawing. In reality, these two layers consist e.g. of a white bead with a different density.

It is also possible to mount a system (20) in the two connecting pieces of the drums (3) and (4). Hence, a foamed sheet will be produced with a base layer and a top layer on both sides.

Another option is to add more than one composition of pre-expanded styrene-polymerised beads by means of the system (20). In that case, it is necessary to divide said system into several compartments by using partitions. To each compartment another compound can be added with a separate screw or venturi system. The top layer thus obtained consists of several strips with each strip having its specific composition.

When the production process is started, Figure 3 shows that the one end of the metal plate pushes the (main) stream of expandable or pre-expanded styrene-polymerised beads downwards, such that a space is created in which a different flow of expandable or pre-expanded styrene-polymerised beads can be pushed by means of a screw or venturi system (13). Hence, a sheet with a top layer is obtained.

By the setup of this invention, it is clear that the height of the layer can be selected by changing the force used by the screw or venturi system (13) to introduce the beads in the system (20). Optionally, the process can be facilitated by placing a metallic protrusion (24) just before the input of the styrene-polymerised expanded beads of the top layer. The length and inclination of this plate can be chosen freely. All this means that the height of each layer is easily controlled.

Apart from the production process, this invention also relates to products manufactured therewith. In particular, it concerns a sheet of expanded styrene-polymerised beads having a top layer on one or both sides, wherein each layer has its specific composition of pre-expanded beads with a certain density and/or its own specific concentration of athermanous substances that are homogeneously distributed over the expanded styrene-polymerised bead. The thickness of the top layer can be determined relatively accurately, while the mechanical quality of the foamed sheet is high.

One can only refer to a sheet with a top layer if the base layer and the top layer have different properties. Since the density has a major influence on the properties of the final product and it is possible to freely choose the density for each layer, the properties of each layer can be chosen optimally in function of the subsequent application.

The specific properties of the base and top layer are largely determined by the density and/or concentration of athermanous substances that are homogeneously distributed in the styrene-polymerised bead. The density will largely determine the mechanical properties and the insulation resistance of the layer. The concentration of athermanous substances may still significantly improve the insulation resistance. Hence, the properties of each layer may be optimally chosen.

Preferably, each layer consists of an expandable styrene-polymerised bead expanding under the same process conditions such that the adhesion between the different foamed layers and the cohesion in each layer is good. With a styrene-polymerised bead is also meant a bead that is only partly made of styrene-containing polymers. An example is given in European patent application No. 2144959, wherein an example is given of an expandable bead consisting of polystyrene and polyolefins.

The present invention also discloses a analogous product produced according to the method as described above, having at least one top layer divided into two or more rectangular areas. These zones may each have a composition of expanded styrene-polymerised beads with a specific density and/or expanded beads with a specific concentration of athermanous substances that ate homogeneously distributed in the bead.

The present invention demonstrates that this new process is easy to apply and provides a good control of the thickness of the layers.

It is obvious that the description of the present invention within its scope may cover alternative embodiments of the invention

## Claims

1. A production unit for continuously producing a laminated styrene-polymerised expanded sheet comprising a base layer and at least one top layer, wherein the production unit comprises:
(a) two belts (1) and (2), placed vertically one on top of the other, manufactured of perforated metal or a perforated flexible material, and rotating drums (3) and (4), wherein the belts (1) and (2) are continuously moving by the action of the drums (3) and (4) at the same speed,
(b) a space (5) between the belts (1) and (2),
(c) a steam chamber (8), suitable for blowing steam through the belts by means of the perforations,
(d) optionally, a vacuum chamber (9),
(e) optionally, a cooling section (10), wherein preferentially air is used as a cooling gas,
(f) optionally, a stabilizing section (11),
(g) optionally, a cutting unit, and
(h) one or more systems (20), comprising one or more connecting pieces (12) coupled to the drums (3) and/or (4), wherein one or more systems (20) comprise a casing with an opening, coupled to a screw or venturi system (13) or silo (50), optionally comprising a feeder device (51), suitable for introducing pre-expanded or expandable styrene-polymerised beads in the top layer.

2. The production unit according to claim 1, wherein the screw or venturi system (13) forms an angle of 90° with the belts (1) and (2).

3. The production unit according to claim 1 or 2, wherein the screw or venturi system (13) or the feeder device (51) can be set to exert an adjustable constant force or a variable periodic force.

4. The production unit according to any one of claims 1 to 3, wherein the feeder device (51) comprises a wheel (52) with a set of rotating tines (53), and wherein the feeder device (51) comprises a set of fixated tines (54).

5. The production unit according to any one of claims 1 to 4, wherein the angle between the screw or venturi system (13) and the belts (1) and (2) can be adjusted.

6. The production unit according to any one of claims 1 to 5, further comprising an additional screw or venturi system (6), suitable for introducing pre-expanded or expandable styrene-polymerised beads in the base layer between the belts (1) and (2), wherein the additional screw or venturi system (6) preferably forms an angle of 0° with the belts (1) and (2)..

7. The production unit according to any one of the preceding claims 1 to 6, wherein the one or more systems (20) comprise a slot (22) through which a metal plate (23) is inserted, wherein the distance the plate extends from the casing of the system (20) is adjustable and/or wherein the slope of the plate relative to the casing is adjustable.

8. The production unit according to any one of the preceding claims 1 to 7, comprising two hinges (30) comprising a threaded rod (31), adjacent to the slot (22) on the exterior of the casing, the metal plate comprising profiles (32), wherein the plate can be fixated to the casing by means of nuts (33), wherein one of the ends of the threaded rods (31) rests against the plate.

9. The production unit according to claim 8, comprising threaded rods (34) at the interior of the casing, wherein the threaded rods (34) are fixated to the casing by means of nuts.

10. The production unit according to any of preceding claims 1-9, wherein the contact areas between the belts and the rest of the production unit with the material comprise a layer with a low friction coefficient, preferably Teflon, and/or wherein on said contact areas small drums (7) are present, driven by the movement of the belts, wherein said preferential drums are made of, or are coated with a material with a low friction coefficient, preferably Teflon.

11. The production unit according to any one of the preceding claims 1 to 10, wherein the distance between the two moving belts is adjustable and/or the belts are laterally movable.

12. A device for continuously producing a laminated styrene-polymerised expanded sheet comprising at least one or more production unit(s) according to any one of the preceding claims 1 to 11.

13. A method for continuously producing a laminated styrene-polymerised expanded sheet, using a production unit according to any one of the preceding claims 1 to 11, or using a device according to claim 12, comprising the steps of:
(a) introducing, preferably pre-expanded, styrene-polymerised beads in the space (5), such that a main stream of beads is formed, preferably by means of a screw or venturi system (6),
(b) introducing another type of styrene-polymerised beads by means of a force perpendicular to the main stream, such that part of the beads of the main stream is pushed away in a controlled manner and the beads of the other types take their place, and
(c) optionally, providing a plate (23) which, just before the insertion of another type of styrene-polymerised beads, locally disrupts the main stream.

14. Method according to claim 13, wherein the beads of different bead types include different density compared to the bead of the main stream.

15. Method according to claim 14, wherein the beads of the other type of beads comprise beads of which the concentration of athermanous materials, preferably the concentration of graphite, carbon black, metal or metal oxide particles that are homogeneously distributed in the styrene-polymerised beads, is different compared to the concentration of the beads of the main stream.
